# EUROPEAN PATENT APPLICATION

(11) **EP 2 048 588 A1**
(43) Date of publication of application: **15.04.2009**
(21) Application number: 07791621.1
(22) Date of filing: 31.07.2007
(51) Int. Cl.: G06F 17/50, A41H 43/00, G06T 17/40

(54) **DEVICE AND ITS METHOD FOR DRESSING SIMULATION AND PROGRAM**

(30) Priority: 03.08.2006 JP 2006211725
(71) Applicant: Shima Seiki Manufacturing., Ltd., Wakayama-shi, Wakayama 6410003 (JP)
(72) Inventor: MORIMOTO, Shinji, Wakayama-shi Wakayama 641-0003 (JP); NAKAMURA, Toshinori, Wakayama-shi Wakayama 641-0003 (JP)
(74) Representative: Carstens, Dirk Wilhelm
(86) International application number: PCT/JP2007/064936
(87) International publication number: WO 2008/016026

(57) **Abstract**

Parts of a garment are placed within a three-dimensional space in accordance with pattern data, and the parts are virtually stitched together in accordance with a stitching relation between the parts. A human body wire-form model 46 is inserted into the stitched garment, the model 46 is then expanded into a human body model 49, and the garment is deformed based on interference with the model 49 and stress generated within the garment, to obtain a garment dressed on the human body model 49. Because the parts that are placed without taking into consideration interference with a human body can be stitched together easily, and the garment is not deformed into an odd shape during an initial stage, a high-speed simulation can be performed.

## Description

### TECHNICAL FIELD

The present invention relates to a dressing simulation of a garment constituted of a plurality of parts such as clothes and knitted fabrics, and particularly to the technique of placing and stitching the parts without interference with a human body model.

### BACKGROUND

A garment in which clothes and the like are used is obtained by stitching parts together. Pattern data of the garment has descriptions of the shape of each part and of a correspondence relation between the parts, and this correspondence relation can be used as a stitching relation. The garment can be designed easily by creating the garment on a computer and dressing a human body model in the garment, without creating an actual garment. In a prior art, the parts are placed around the human body model on a computer screen, and the parts are stitched together on the computer in accordance with the pattern data. Next, a stable shape of the garment is dynamically simulated in consideration of interference between the garment and a human body. In this case, placing the garment around the human body model requires effort.

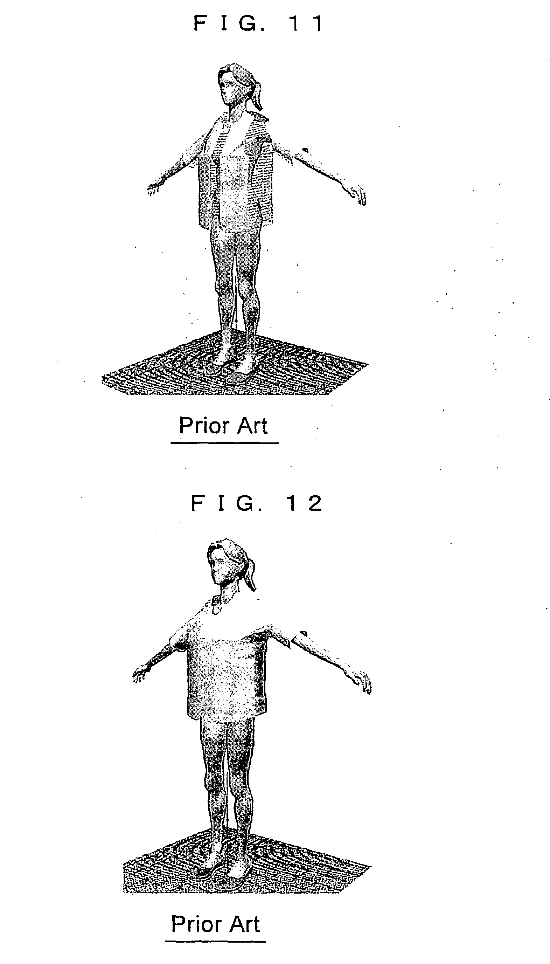

FIG. 11 shows an example in which each part is placed around the human body model in order to dress the human body in a simple garment constituted of both sleeves, right and left front bodies, and a rear body. Here, it is not always easy to place each part in an appropriate position in the human body model. For example, placing each part such that an arm can be slipped through each sleeve is not easy. In addition, placing the parts becomes more difficult as the number of parts increases in a garment that is more complicated than that shown in FIG. 11. It is also difficult to place the parts in an invisible section such as a part under a crotch area. The mesh-like lines in FIG. 11 represent the stitching relation between the parts, and a garment that is virtually stitched according to this stitching relation is shown in FIG. 12. Because the parts are separated from the human body model, the garment is oddly expanded. Because the garment is separated from the human body model, it requires a great computational effort and simulation time to simulate the garment in order to bring it close to obtaining a natural shape.

Patent Document 1 (Japanese Patent Application No. 2614691), an associated prior art, proposes the idea of dressing a somewhat thin human body model in a virtual garment and expanding the human body model. Patent Document 2 (WO2005/082185A) proposes the idea of expanding a knitted fabric, placing it around a human body model, and then shrinking the knitted fabric to bring it close to obtaining a natural shape. Neither of these prior patents discloses the idea of virtually stitching the parts according to pattern data, without using the human body model.

### DISCLOSURE OF THE INVENTION

An object of the present invention is to be able to place parts easily without interference with a human body and virtually stitch a garment into a substantially natural shape so that the simulation time can be reduced.
Another object of the present invention is to be able to insert a wire-form model into a virtual garment in a way that it can be inserted easily, and thereafter deform the wire-form model into a natural human shape.
An additional object of the present invention is to be able to simply insert the wire-form model and perform simple simulation when the wire-form model expands.

The present invention is a dressing simulation device for simulating a state in which a human dresses a garment, on the basis of pattern data having descriptions of the shapes of parts of the garment and of a stitching relation between the parts, the dressing simulation device being characterized by having:
means for virtually placing the parts within a three-dimensional space in accordance with the pattern data, and obtaining a virtually stitched garment 44 by stitching the parts in accordance with the stitching relation described in the pattern data;
means for inserting a wire-form model of a human body into the virtually stitched garment;
means for expanding the wire-form model inserted into the virtually stitched garment, and deforming the wire-form model into a human-shaped human body model; and
means for deforming the virtually stitched garment into a stable shape based on interference with the human body model and stress within the virtually stitched garment, and simulating a state in which the human body model dresses the garment.

The present invention is also a dressing simulation method for simulating a state in which a human dresses a garment, on the basis of pattern data having descriptions of the shapes of parts of the garment and of a stitching relation between the parts, the dressing simulation method being characterized by having the steps of:
virtually placing the parts within a three-dimensional space in accordance with the pattern data, and obtaining a virtually stitched garment 44 by stitching the parts in accordance with the stitching relation described in the pattern data;
inserting a wire-form model of a human body into the virtually stitched garment;
expanding the wire-form model inserted into the virtually stitched garment, and deforming the wire-form model into a human-shaped human body model; and
deforming the virtually stitched garment into a stable shape based on interference with the human body model and stress within the virtually stitched garment, and simulating a state in which the human body model dresses the garment.

The present invention is also a dressing simulation program for simulating a state in which a human dresses a garment, on the basis of pattern data having descriptions of the shapes of parts of the garment and of a stitching relation between the parts, the dressing simulation program being characterized by having:
an instruction for virtually placing the parts within a three-dimensional space in accordance with the pattern data, and obtaining a virtually stitched garment 44 by stitching the parts in accordance with the stitching relation described in the pattern data;
an instruction for inserting a wire-form model of a human body into the virtually stitched garment;
an instruction for expanding the wire-form model inserted into the virtually stitched garment, and deforming the wire-form model into a human-shaped human body model; and
an instruction for deforming the virtually stitched garment into a stable shape based on interference with the human body model and stress within the virtually stitched garment, and simulating a state in which the human body model dresses the garment.

Preferably, the wire-form model has a joint corresponding to a joint of the human body model, and the dressing simulation device further has means for deforming the wire-form model with respect to the joint.
Preferably, the dressing simulation device further has means for deforming the virtually stitched garment so as to release the stress acting in the garment, before inserting the wire-form model into the stitched garment.

The description of the dressing simulation device in this specification is directly applied to the dressing simulation method and the dressing simulation program, unless otherwise stated. Moreover, the description of the simulation method is directly applied to the simulation device and the simulation program, unless otherwise stated.

According to the present invention, because each of the parts are virtually placed within a three-dimensional space in accordance with the pattern data, the parts can be placed without interference with a human body. Therefore, the parts can be placed easily before stitching them. Moreover, because the parts can be stitched in a natural size, not only is it possible to suppress deformation of the obtained garment, but also it is possible to reduce the simulation time and to perform fine simulation within the same simulation time.

By providing the wire-form model with joints corresponding to joints of the human body model, the wire-form model can be inserted in a way that it can be inserted easily into the stitched garment, and then the wire-form model can be deformed by operating the joints.

By deforming the garment to release the stress before inserting the wire-form model and after stitching the parts, the garment is deformed three-dimensionally, reflecting the purpose of the pattern data, whereby the wire-form model can be inserted easily. Also, because the garment can be brought close to obtaining a natural shape before the wire-form model expands, interference between the garment and the wire-form model during the initial stage of the expansion of the wire-form model can be reduced, whereby the simulation time can be made short.

### BRIEF DESCRIPTION OF THE DRAWINGS

FIG. 1 is a block diagram of a dressing simulation device of an embodiment;
FIG. 2 is a flowchart showing a dressing simulation method of the embodiment;
FIG. 3 is a block diagram of a dressing simulation program of the embodiment;
FIG. 4 is a diagram showing a state in which parts are placed virtually within a three-dimensional space in accordance with pattern data in the embodiment;
FIG. 5 is a diagram showing a state in which the parts in FIG. 4 are virtually stitched together in accordance with the pattern data and thus obtained garment is relaxed;
FIG. 6 is a diagram following FIG. 5, showing a state in which a wire-form model is inserted into the stitched garment;
FIG. 7 is a diagram following FIG. 6, showing a state in which the garment is dynamically shifted to a stable state, while taking into consideration interference between the garment and a human body obtained by expanding the wire-form model;
FIG. 8 is a diagram for explaining how the stitched garment is relaxed before inserting the wire-form model is inserted thereto in the embodiment;
FIG. 9 is a diagram showing a correspondence between the wire-form model and joints of a human body model in the embodiment;
FIG. 10 is a diagram for explaining the forces acting on the polygons on the virtually stitched garment in the embodiment;
FIG. 11 is a diagram showing how parts of a shirt are placed around a human body model in a conventional example; and
FIG. 12 is a diagram following FIG. 11, showing a state in which the parts are virtually stitched.

### EXPLANATION OF REFERENCE NUMERALS

- 2: Dressing simulation device
- 4: Bus
- 6: Stylus
- 7: Digitizer
- 8: Keyboard
- 10: Color monitor
- 12: Color printer
- 14: Disc driver
- 16: LAN interface
- 18: Memory
- 20: Pattern data storage
- 22: Polygon generator
- 24: Stitching unit
- 25: Wire-form model insertion unit
- 26: Wire-form model expansion unit
- 28: Dynamic simulation unit
- 30: Model deformation unit
- 32: Simulation program
- 34: Stitching instruction
- 35: Wire-form model insertion instruction
- 36: Wire-form model expansion instruction
- 37: Simulation instruction
- 38: Model deformation instruction
- 40: Parts placement before stitching
- 41: Sleeve
- 42: Front body
- 43: Rear body
- 44: Virtually stitched garment
- 46: Wire-form model
- 48: Applied virtual garment
- 49: Human body model
- 50, 51: Body
- 52, 53: Polygon
- 54 to 62: Joint
- 70 to 73: Polygon
- F1 to F3: Tension
- K1 to K3: Stress between polygons

### BEST MODE FOR CARRYING OUT THE INVENTION

The best mode for carrying out the present invention is now described below. Embodiment

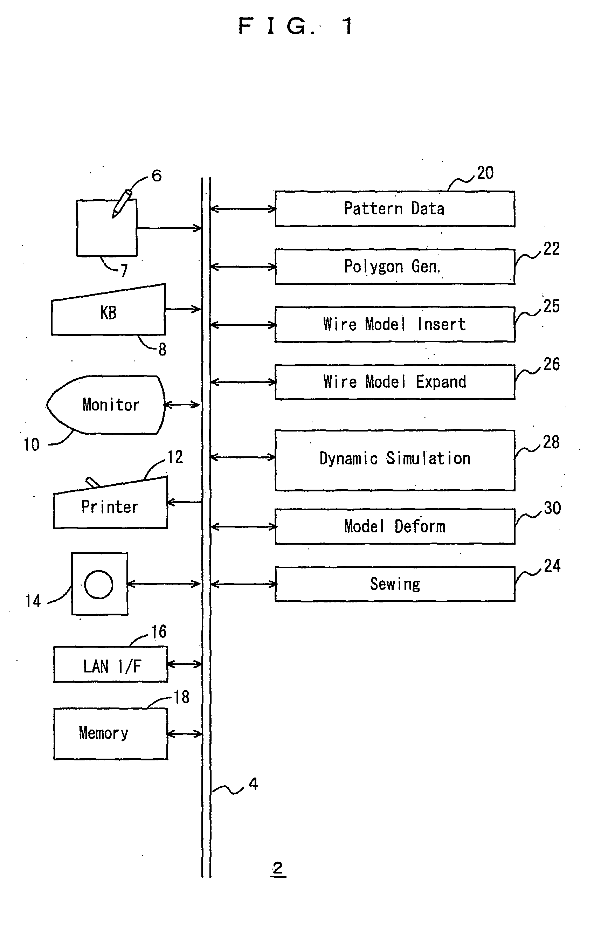

FIG. 1 to FIG. 10 each show a dressing simulation device 2, dressing simulation method, and simulation program 32 according to an embodiment. In FIG. 1, reference numeral 4 represents a bus, 6 a stylus, and 7 a digitizer for designing a garment by means of the stylus 6. Reference numeral 8 represents a keyboard, and 10 a color monitor for displaying the designed garment and simulation results. Reference numeral 12 represents a color printer. In addition, a mouse, trackball, joystick, and other manual inputting devices may be provided. Reference numeral 14 represents a disc driver for inputting/outputting data to and from the disc driver and an appropriate disk, 16 a LAN interface, and 18 a memory.

Pattern data of a garment is created using the stylus 6 and the like and then stored in a pattern data storage 20. Reference numeral 22 is a polygon generator for dividing each part stored in the pattern data storage 20 into a plurality of polygons. The polygons may be triangles or squares. The pattern data storage 20 stores not only the shape of each pattern but also the attributes of a front body, rear body, right front sleeve, collar, pocket and the like. The pattern data storage 20 further stores a correspondence relation (stitching relation) between the parts. A stitching unit 24 places each part within a three-dimensional space in accordance with the attributes of the pattern data. For example, the parts for the front body are positioned in front of the parts for the rear body, the parts for a pocket of the front body are positioned in front of the front body itself, the collar is positioned above the bodies, and a left front sleeve is positioned in a left front part of the bodies.

The parts are virtually stitched together in accordance with the stitching relation stored in the pattern data. The stitched garment is deformed into a natural shape using a dynamic simulation unit 28. As a result, for example, two sheet-like front and rear bodies are deformed into a cylinder so that a wire-form model can be inserted thereto easily. A wire-form model insertion unit 25 inserts a wire-form model consisting of at least one axis (torso) and a maximum of five axes (torso, both legs and both arms) into the stitched virtual garment. When inserting the wire-form model, for example, the multiaxial wire-form model is broken into separate axes, and each of the axes is inserted into the garment. The connecting points of the axes on the wire-form model are stored, and the axes broken by the connecting points are joined to each other or moved from the outside of the wire-form model to the inside of the same, supposing that the wire-form model can be moved freely through the garment.

A wire-form model expansion unit 26 expands the wire-form model and deforms it into a human body-shaped model. Note that the positions or the like of joints are specified beforehand in the wire-form model. These positions correspond to the joints of the human body model, and each position on the wire-form model corresponds to each of the positions on the human body model. The dynamic simulation unit 28 dynamically simulates the virtually stitched garment to deform it into a more stable shape. The dynamic simulation unit 28 performs the simulation not only during the process of expanding the wire-form model but also before the expansion and after inserting the wire-form model, or after completely expanding the wire-form model. The simulation accuracy may vary at each stage.

When deforming the garment at the time of the expansion of the wire-form model, for example, interference between the wire-form model and the garment is taken into consideration. This interference is expressed as a collision and friction between the wire-form model and the garment. In the collision, the polygons of the garment receive large resistance when attempting to enter the wire-form model. In a friction force, when the polygons of the garment approach the section within a predetermined distance from the surface of a human body, they receive a frictional force proportional to the speed of each approaching polygon. Each of the polygons of the wire-form model receives not only the force from the human body model but also stress generated within the polygon for deforming the polygon, as well as stress and gravitational force generated from an adjacent polygon. The gravitational force may act on each polygon or act on the gravity center of each part and then travel from the gravity center to each polygon. When each of the polygons is stretched from an initial natural shape, stress directed toward the center of the polygon acts from each side of the polygon to its vertex in response to the deformation. Although the same stress acts even when the polygon is compressed, this stress is small. The polygons make the stress thereof act on one another. Therefore, each of the polygons becomes stable in the position and shape where the force received from the human body model is balanced with the stress and gravitational force within the garment. The dynamic simulation unit 28 repeats the processing of obtaining a force acting on each of the polygons, solving the motion equations for the polygons, deforming and moving the polygons in accordance with the obtained acceleration, and again obtaining the force acting on each of the polygons with respect to the garment consisting of the deformed/moved polygons.

A model deformation unit 30 operates the joints of the wire-form model to deform the wire-form model. Because the joints of the wire-form model are replaced with the joints of the human body model, the human body model can also be deformed using the model deformation unit 30. For example, when slipping an arm through a sleeve, it is preferred to straighten the arm. However, a man rarely spreads out his arms to be in a cruciform pose and thus usually bends his arms. Therefore, a natural posture of a human can be obtained by inserting the wire-form model into the garment and thereafter deforming the right and left arms in a state in which the arms are spread out to form a cruciform with the body. Moreover, when the joints of the human body model are operated after completely expanding the wire-form model, the dressed state can be simulated while changing the posture of the human body model.

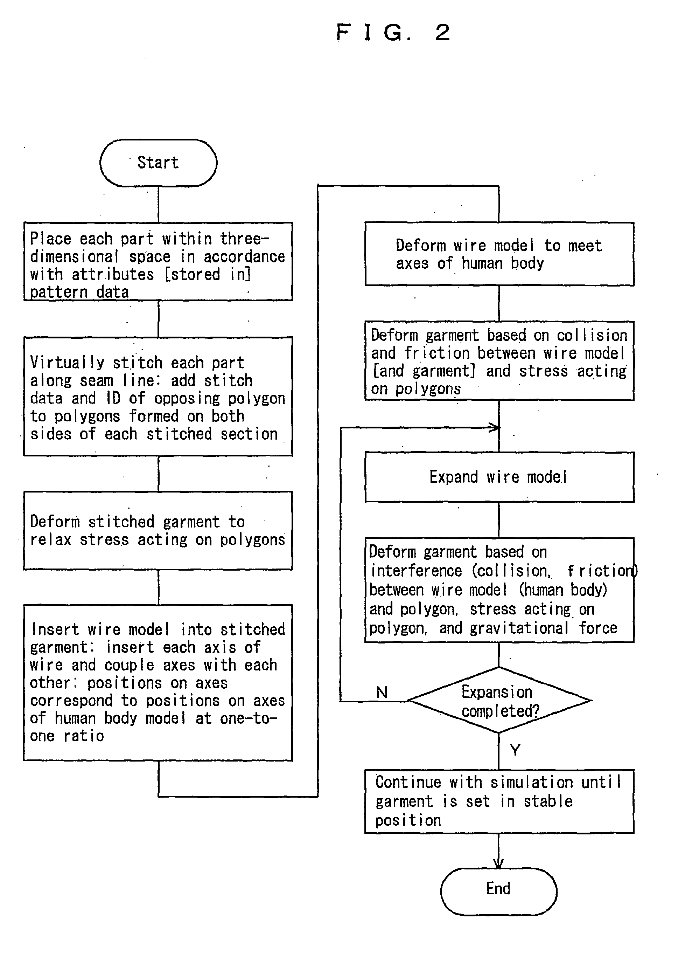

FIG. 2 shows a dressing simulation method of the embodiment. Each part is placed within the three-dimensional space in accordance with the attributes stored in the pattern data. For example, the front body and front sleeves are placed in front of the rear body and rear sleeves, a hem in a lower part of the garment, and the collar in an upper part of the garment. Relations between the top and bottom, between the right and left, and between the front and rear are described in the pattern data as the attributes of the parts. In addition, a seam line between the patterns where the front and rear bodies are stitched together at each side is described in the pattern data. For example, each part is divided into a plurality of polygons before stitching.

Each part is virtually stitched together along the seam line obtained from the pattern data. In opposing polygons having the seam line therebetween, an ID of one of the polygons is described as a stitch partner, and data about which side of the polygon is stitched is added. Next, the garment is deformed to relax stress generated due to the stitching. In a stage where the parts are virtually on the patterns, the polygons are in the same plane, and an angle between the polygons is 180°. When the parts are stitched together, the angle between the polygons on both sides of each stitched section becomes smaller than 180°, and thereby bending stress is generated in this section. When the parts are defined in view of the shape of a three-dimensional garment, the stress acting on each part deforms the garment three-dimensionally. Therefore, the parts are deformed to remove the stress generated within the garment. For example, the body obtained immediately after the stitching is shaped in a manner that the front and rear two sheets are overlapped in parallel, but the shape of the body becomes similar to a cylindrical shape by relaxing the stress.

The wire-form model is inserted into the stitched garment. The wire-form model can be inserted easily because relaxing the garment expands the wire-form model into the shape of a cylinder. Note that the wire-form model is more a wire-like or rod-like model configured with respect to an axis of a human body, than a model that is literally made of wire. Preferably, the wire-form model is a model in which the thickness of the wire or rod is not taken into consideration. For example, a wire-form model constituted of three axes of both legs and a backbone is inserted from the lower side of the garment, and the axes of both arms are inserted from the sleeves and connected to each other at the back. Positions on the axes correspond to positions on axes of the human body model at one-to-one ratio. In this stage, the wire-form model is in the shape where the both arms are spread out to form a cruciform with the backbone, which is an unnatural human body posture. Therefore, the axes of the arms are deformed. When the wire-form model interferes with the garment during this process, the garment is deformed based on the resistance and frictional force between the wire-form model and the polygons of the garment and the stress between the polygons.

Next, the wire-form model is expanded, and the garment is deformed accordingly. When the wire-form model is expanded, it becomes close to the human body model, whereby the garment and the wire-form model interfere with each other. Therefore, for example, the garment is deformed based on the resistance or frictional force generated due to a collision between the wire-form model and the polygons of the garment, stress between the polygons, and the gravitational force acting on the garment. Then, this process is repeated until the expansion is completed. Even after the expansion of the wire-form model is completed, the simulation is continued until the garment is formed into a stable shape. Note that the results of the simulation are displayed on the color monitor when each stage shown in FIG. 2 is carried out.

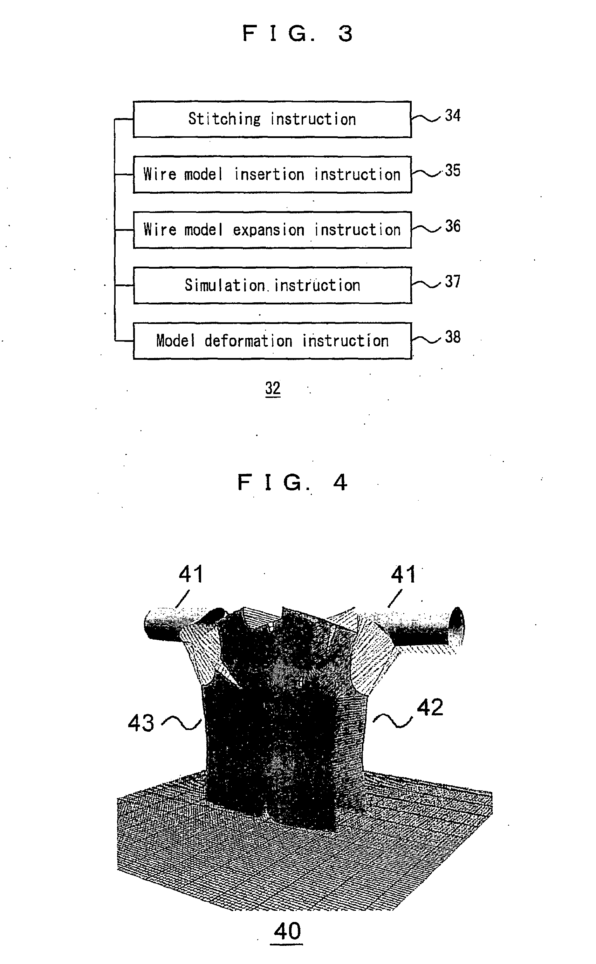

FIG. 3 shows a dressing simulation program 32. In this drawing, reference numeral 34 represents a stitching instruction for stitching the parts within the three-dimensional space in accordance with the pattern data, and a wire-form model insertion instruction 35 is for inserting the axes of the wire-form model into the virtually stitched garment. A wire-form model expansion instruction 36 is for expanding the inserted wire-form model and deforms it into the human body model. A simulation instruction 37 is for performing a simulation to deform the garment on the basis of interference between the garment and the wire-form model, the gravitational force acting on the garment, and the stress generated between the polygons of the wire-form model. This simulation is performed after the parts are stitched together using the stitching instruction 34, before expanding and after inserting the wire-form model, at the time of expansion of the wire-model, and after completion of the expansion of the wire-form model. A model deformation instruction 38 is for operating the joints of the wire-form model or of the human body model corresponding to the wire-form model, to deform the model and change the postures.

FIGS. 4 to 7 each show a process of dressing the human body model in a T-shirt. FIG. 4 shows a parts placement before stitching 40. Reference numeral 41 represents both right and left sleeves, 42 the front body, 43 the rear body, and the thin lines the correspondence relations between stitched parts. Because each of the sleeves 41, 41 is stitched at its lower section, they are deformed into a cylinder.

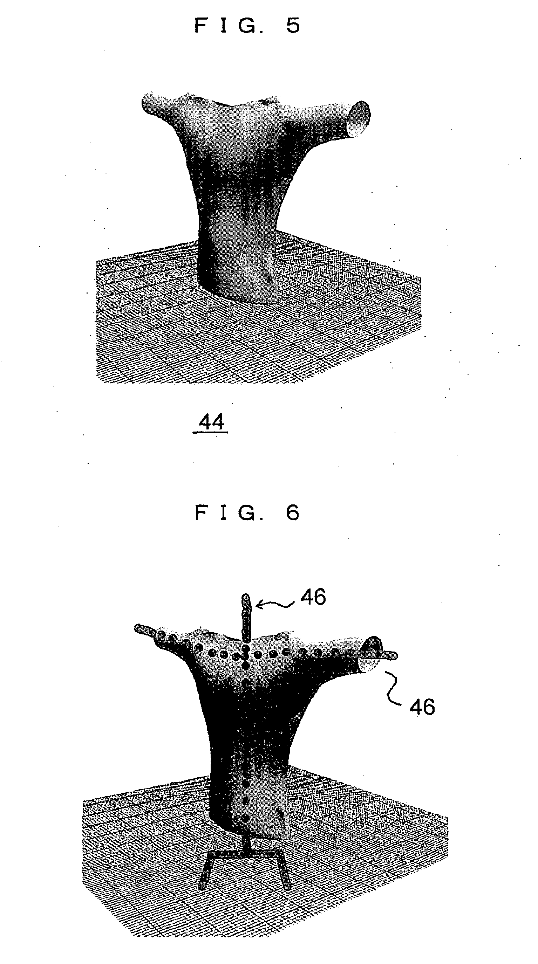

FIG. 5 shows a virtually stitched garment 44, which is relaxed in order to remove stress generated due to stitching.
FIG. 6 shows the garment into which a wire-form model 46 is inserted. The wire-form model 46 consists of a backbone axis, axes of both legs joined together at a lower section.of the backbone axis, and axes of both arms. For example, the backbone axis is inserted from the lower side of the garment, and the axes of the both arms are inserted from respective cuffs. The two axes are connected at the section where the backbone and the both arms are joined together.

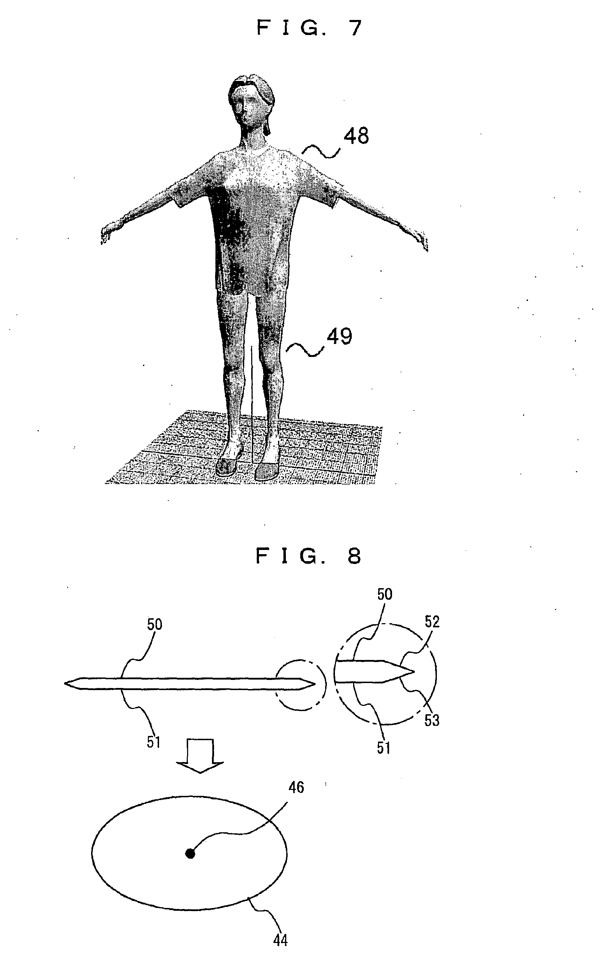

FIG. 8 shows how the stitched garment is relaxed. In a state of the garment after the stitching is completed, the bodies are configured by two sheets of front and rear bodies 50, 51, and polygons 52, 53 are bent at each stitched section. Moreover, each part of the garment is designed such that it is formed into a three-dimensional shape. Therefore, by relaxing the garment, the garment is formed into a three-dimensional shape that somewhat reflects the design stored in the pattern data.

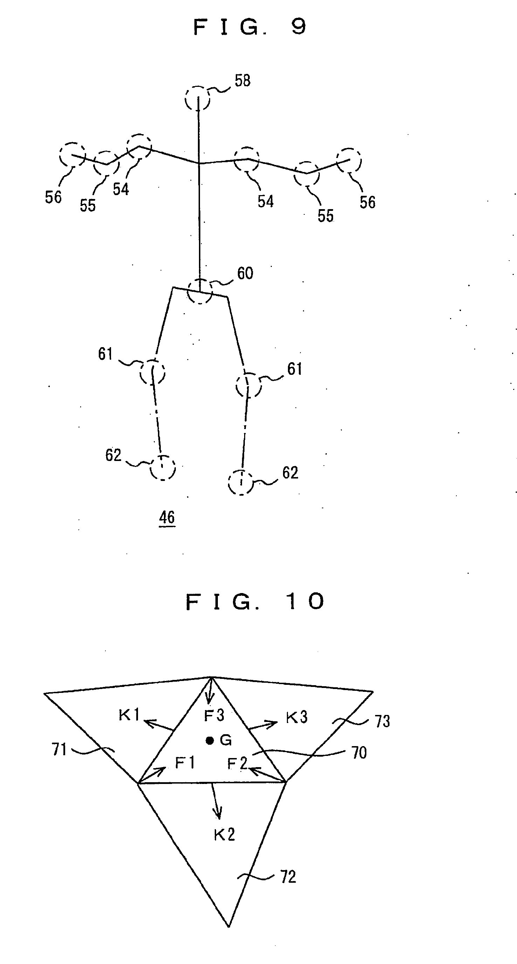

FIG. 9 shows a configuration of the wire-form model 46. Reference numeral 54 represents a shoulder joint, 55 an elbow joint, and 56 a wrist joint. Reference numeral 58 represents the base of neck, and 60 a hip joint. Although not shown in FIG. 6, positioned below the hip joint 60 are a knee joint 61 and an ankle joint 62. The postures of the human body model can be changed by operating these joints 54 to 62.

FIG. 10 schematically shows the forces acting between the polygons. In a central polygon 70 having G as its center, forces F1 to F3 act from, for example, three vertices of this polygon because the polygon 70 is deformed from its original shape. Forces K1 to K3 act on adjacent polygons 71 to 73 as well. These forces are generically referred to as the stress acting on the garment. In addition to these forces, gravitational force also acts on the polygon 70. The polygon 70 receives a resistance when coming into contact with the human body model, and receives a frictional force in the vicinity of the human body model. Next, when the polygon makes a movement in order to set the garment in the stable shape by performing a simulation, a frictional force proportional to the speed of the moving polygon is caused to act in order to reduce the kinetic energy.

FIG. 7 shows a virtual garment 48 that is put on a human body model 49 changed from the wire-form model 46. The garment 48 has a natural three-dimensional shape with a drapey hem. From the state shown in FIG. 7, by operating the joints of the human body model 49 and moving the human body model 49 to simulate the shape of the garment 48 again accordingly, the design of the garment can be evaluated in a variety of postures.

The following effects can be obtained in the embodiment.
1) Because the parts can be placed without interference with the human body model, the parts can be placed easily.
2) Because the virtually stitched garment does not expand in an odd way, a simulation can be performed in a short time.
3) A simulation can be performed easily even when the number of parts is increased or arrangement of the parts is complicated.
4) Even when simulating a layered look, the distance between the outer garment and the human body model does not increase significantly. Therefore, a simulation can be performed easily.
5) The postures of the human body model can be arbitrarily adjusted by operating the joints of the wire-form model, inserting the wire-form model in a way that it can be easily inserted into the garment, and thereafter deforming the garment inserted with the wire-form model.
6) By performing a simple simulation to reduce the stress generated in the garment before inserting the wire-form model into the stitched garment, the garment is three-dimensionally deformed, reflecting the pattern data, whereby the wire-form model can be inserted into the garment easily. In addition, deformation of the garment can be suppressed during the simulation, whereby the simulation can be performed efficiently.

## Claims

1. A dressing simulation device 2 for simulating a state in which a human dresses a garment, on the basis of pattern data having descriptions of the shapes of parts of the garment and of a stitching relation between the parts, the dressing simulation device 2 comprising:
means for virtually placing the parts within a three-dimensional space in accordance with the pattern data, and obtaining a virtually stitched garment 44 by stitching the parts in accordance with the stitching relation described in the pattern data;
means for inserting a wire-form model 46 of a human body into the virtually stitched garment 44;
means for expanding the wire-form model 46 inserted into the virtually stitched garment 44, and deforming the wire-form model 46 into a human-shaped human body model 49; and
means for deforming the virtually stitched garment 44 into a stable shape based on interference with the human body model 49 and stress within the virtually stitched garment 44, and simulating a state in which the human body model 49 dresses the garment.

2. The dressing simulation device 2 according to claim 1, **characterized in that** the wire-form model 46 has a joint corresponding to a joint of the human body model 49, and the dressing simulation device 2 further comprises means for deforming the wire-form model 46 with respect to the joint.

3. The dressing simulation device 2 according to claim 1, further comprising means for deforming the virtually stitched garment 44 so as to release the stress acting in the garment, before inserting the wire-form model 46 into the stitched garment.

4. A dressing simulation method for simulating a state in which a human dresses a garment, on the basis of pattern data having descriptions of the shapes of parts of the garment and of a stitching relation between the parts, the dressing simulation method comprising the steps of:
virtually placing the parts within a three-dimensional space in accordance with the pattern data, and obtaining a virtually stitched garment 44 by stitching the parts in accordance with the stitching relation described in the pattern data;
inserting a wire-form model 46 of a human body into the virtually stitched garment 44;
expanding the wire-form model 46 inserted into the virtually stitched garment 44, and deforming the wire-form model 46 into a human-shaped human body model 49; and
deforming the virtually stitched garment 44 into a stable shape based on interference with the human body model 49 and stress within the virtually stitched garment 44, and simulating a state in which the human body model 49 dresses the garment.

5. The dressing simulation method according to claim 4, further comprising a step of deforming the virtually stitched garment 44 so as to release the stress acting in the garment, before inserting the wire-form model 46 into the stitched garment.

6. A dressing simulation program 32 for simulating a state in which a human dresses a garment, on the basis of pattern data having descriptions of the shapes of parts of the garment and of a stitching relation between the parts, the dressing simulation program comprising:
an instruction for virtually placing the parts within a three-dimensional space in accordance with the pattern data, and obtaining a virtually stitched garment 44 by stitching the parts in accordance with the stitching relation described in the pattern data;
an instruction for inserting a wire-form model 46 of a human body into the virtually stitched garment 44;
an instruction for expanding the wire-form model 46 inserted into the virtually stitched garment 44, and deforming the wire-form model 46 into a human-shaped human body model 49; and
an instruction for deforming the virtually stitched garment 44 into a stable shape based on interference with the human body model 49 and stress within the virtually stitched garment 44, and simulating a state in which the human body model 49 dresses the garment.

7. The dressing simulation program according to claim 6, further comprising an instruction for deforming the virtually stitched garment 44 so as to release the stress acting in the garment, before inserting the wire-form model 46 into the stitched garment.
